# EUROPÄISCHE PATENTANMELDUNG

(11) **EP 2 062 632 A1**
(43) Veröffentlichungstag der Anmeldung: **27.05.2009**
(21) Anmeldenummer: 07022589.1
(22) Anmeldetag: 21.11.2007
(51) Int. Cl.: B01D 29/21, B01D 35/147

(54) **Filterelement**

(71) Anmelder: IBS Filtran Kunststoff-/Metallerzeugnisse GmbH, 51597 Morsbach (DE)
(72) Erfinder: Stausberg, Wolfgang, 51597 Morsbach (DE); Bernards, Daniel, 51789 Lindlar (DE)
(74) Vertreter: Lang, Friedrich

(57) **Zusammenfassung**

Die Erfindung betrifft ein Filterelement zur Filterung von Fluid für einen Motor oder ein Getriebe, aufweisend ein erstes Filtermedium, welches zylinderförmig aufgebaut ist, wobei zur Filterung in einer zugehörigen Filtervorrichtung das Fluid senkrecht auf die Umfangsfläche des ersten Filtermediums auftreffen, in dieses eindringen und passieren kann. Das Filterelement weist ein zweites Filtermedium mit einer vom ersten Filtermedium unterschiedlichen Filterdichte auf, wobei das erste Filtermedium und das zweite Filtermedium als Filterlagen aufeinander geschichtet sind und diese zusammen spiralförmig aufgewickelt sind. Damit kann schneller eine gewünschte Fluidreinheit erreicht werden als bei Filterelementen, die ausschließlich einen radialen Fluiddurchtritt durch die Filterelemente ermöglichen. Durch den spiralförmigen Aufbau wird auch eine höhere Schmutzaufnahmekapazität erreicht.

## Beschreibung

Die Erfindung betrifft ein Filterelement zur Filterung von Fluid für einen Motor oder ein Getriebe, wobei das Filterelement ein erstes Filtermedium aufweist, welches zylinderförmig aufgebaut ist. Die Erfindung betrifft ferner eine Filtervorrichtung mit einem derartigen Filterelement.

Zur Filterung von Fluid in einem Motor oder einem Getriebe können Druckfilter im Fluid-Nebenstrom eingesetzt werden. Um die Kühlleistung des Motors oder Getriebes nicht zu gefährden, ist es von Bedeutung, dass durch den Druckfilter bzw. das zugehörige Filterelement stets ein ausreichender Volumenstrom passieren kann. Bei gleichem Volumenstrom kann ein Anstieg des Differenzdruckes zwischen Fluideinlass und Fluidauslass des Filterelementes auftreten, wenn dessen Fluiddurchlässigkeit aufgrund der aufgenommenen Filterpartikel abgenommen hat. Überschreitet der Differenzdruck einen vorbestimmten Wert, lässt sich üblicherweise das Fluid durch ein Bypass-Ventil leiten, ohne dass es das Filterelement durchdringt und eine Filterung erfolgt.

Als Filterelement kann in einem Druckfilter ein zylindrisches Filterelement verwendet werden, welches zum Beispiel als Filzschalenelement, Filzstopfpackung oder als Wickelfilter in Form eines "massiven" Filterelementes ausgebildet ist. Die Packungsdichte von Filterfasern ist bei einem derartigen Filterelement sehr hoch, wodurch ein hoher Strömungswiderstand entsteht. Relativ geringe Partikelbeladungen führen dabei schnell zu einem sehr hohen Differenzdruckanstieg. Die Fluid-Durchströmung erfolgt radial von außen nach innen, die angeströmte Oberfläche ist relativ klein.

Alternativ dazu kann das zylindrische Filterelement auch sterngefaltet in plissierter Form ausgebildet sein, wobei nicht eine hohe Faserdichte mit hoher Filtrationsleistung, sondern eine möglichst große Filtrationsfläche angestrebt wird. Der Differenzdruck bleibt bei einem derartigen Filterelement mit einer geringen Mediendicke relativ niedrig. Dieses Filterelement setzt sich nicht so schnell mit den abzureinigenden Filterpartikeln zu und erreicht eine höhere Standzeit als das massive Filterelement. Das sterngefaltete Filterelement ist jedoch aufwändig in der Herstellung. Die Sternfaltung wird mittels einer Plissieranlage durchgeführt, wobei dieser Vorgang zeit- und kostenintensiv ist. Ferner ist es aufgrund des vorherrschenden Differenzdruckes erforderlich, das Filtermedium mit einem Stützgitter zu versehen, um ein Zusammenfallen der Sternfalten zu verhindern, wodurch die Kosten für dieses Filterelement erhöht werden. Ebenso muss eine stirnseitige Abdichtung der Faltensterne erfolgen, so dass es zu keiner Umgehung des Filterelementes kommt. (i. d. R.: Verklebung, Verschweißung zwischen Filtermedium und Endkappe)

Es ist eine Aufgabe der Erfindung, ein Filterelement zur Filterung von Fluid für einen Motor oder ein Getriebe zu schaffen, wobei das Filterelement ein Filtermedium aufweist, welches zylinderförmig aufgebaut ist, wobei ein geringer Differenzdruckanstieg, eine hohe Filterstandzeit und eine hohe Filtrationsleistung auch bei breiter Partikelgrößenverteilung erreicht wird, das Filterelement jedoch einfach und kostengünstig herzustellen ist. Ferner soll das Filterelement eine hohe Schmutzaufnahmekapazität besitzen und hohe Partikel-Abreinigungsgeschwindigkeit ermöglichen. Es soll kein Stützgitter erforderlich sein, und eine einfache Abdichtung der Stirnseiten des Filterelementes soll ebenfalls möglich sein. Ferner ist es eine Aufgabe der Erfindung, eine Filtervorrichtung mit einem solchen Filterelement zu schaffen.

Die Aufgabe wird durch die Gegenstände der unabhängigen Ansprüche gelöst. Vorteilhafte Weiterbildungen der Erfindung sind Gegenstand der Unteransprüche.

Das erfindungsgemäße Filterelement zur Filterung von Fluid für einen Motor oder ein Getriebe weist ein erstes Filtermedium auf, welches zylinderförmig aufgebaut ist, wobei zur Filterung in einer zugehörigen Filtervorrichtung das Fluid senkrecht auf die Umfangsfläche des ersten Filtermediums auftreffen, in dieses eindringen und passieren kann. Das Filterelement weist ein zweites Filtermedium mit einer vom ersten Filtermedium unterschiedlichen Filterdichte auf, wobei das erste Filtermedium und das zweite Filtermedium als Filterlagen aufeinander geschichtet sind und diese zusammen spiralförmig aufgewickelt sind. Durch die unterschiedliche Filterdichte der Filtermedien dringt auftreffendes Fluid nicht einfach radial in die Filtermedien ein, sondern wird innerhalb eines Filtermediums und entlang der durch die aufeinander geschichteten Filtermedien gebildeten Phasengrenze geleitet. Damit entsteht ein spiralförmiger Fließkanal bzw. eine Fließschicht für das zu filternde Fluid, wodurch das Fluid tiefer in das Filterelement eindringen kann, als wenn es nur frontal auf ein einzelnes Filtermedium treffen würde. Eines der beiden Filtermedien wirkt somit wie eine Drainage-Schicht. Das Fluid kann auch durch das zweite Filtermedium hindurchdringen und muss nicht einen spiralförmigen Weg vom äußeren Anfang bis zum inneren Ende eines Filtermediums entlang fließen, so dass sich das Fluid je nach Reinheit von selbst einen optimalen Passierweg suchen kann.

Ein weiterer Vorteil dieses erfindungsgemäßen Filterelementes besteht darin, dass durch die spiralförmige Fließschicht und die Möglichkeit, tiefer in das Filterelement einzudringen, eine homogenere Beladung des Filtermediums, ein geringerer Anstieg des Differenzdruckes und eine höhere Filterstandzeit erreicht wird. Da eine größere Filtermedienfläche bzw. ein größeres Filtermedienvolumen genutzt wird, erfolgt eine schnellere Filterung. Somit bleiben die zu filternden Partikel nicht nur in der äußersten Filtermedienlage hängen, wobei diese schnell ihre maximale Partikelaufnahmekapazität erreichen würde. Vielmehr können die Partikel ein größeres Filtermedienvolumen zur Abscheidung nutzen, so dass die Partikelaufnahmekapazität des gesamten Filterelementes vergrößert ist. Ferner erhöht sich die Filtrationsleistung durch Einsatz von zwei unterschiedlich dichten Filtermedien. Ein Stützgitter oder ähnliches ist nicht erforderlich, da durch den spiralförmigen Aufbau eine ausreichende Stabilität erzielt wird. Durch den spiralförmigen Aufbau des Filterelementes liegt auch ein viel einfacherer Aufbau als bei dem sternförmigen plissierten Filterelement vor, so dass die Herstellung kostengünstig ist und die Stirnseiten relativ einfach abgedichtet werden können.

Es ist vorteilhaft, wenn eines der Filtermedien ein Grobfiltermedium ist und das andere Filtermedium ein Feinfiltermedium ist. Je nach Qualität des Fluids und nach der Anwendung können auch ein Feinfiltermedium und ein Feinstfiltermedium zum Einsatz kommen. Von Bedeutung ist jeweils lediglich, dass die Filterdichte der beiden Filtermedien unterschiedlich ist, so dass ein relativ viskoses Fluid von dem gröberen Filtermedium aufgenommen und spiralförmig weitergeleitet werden kann.

Besonders bevorzugt trifft in Fluidströmungsrichtung betrachtet das Fluid zuerst auf das Grobfiltermedium und anschließend auf das Feinfiltermedium, so dass das Grobfiltermedium eine Außenlage und das Feinfiltermedium eine Innenlage bildet. Damit wird schon zu Beginn der Filterung eine kaskadenförmige Filterung erreicht.

Gemäß einer weiteren Ausführungsform ist mindestens ein zusätzliches Filtermedium als zusätzliche Filterlage auf dem ersten und zweiten Filtermedium angeordnet. Somit kann eine noch feinere Stufung der Filterung erzielt werden, ohne dass das oben beschriebene Wirkprinzip des erfindungsgemäßen Filterelementes geändert würde.

Es ist vorteilhaft, wenn ein Ende der Außenlage über das benachbarte Ende der Innenlage übersteht. Somit fällt die Stufung der Filtermedienschichtung am Ende bzw. Anfang der Spirale geringer aus, als wenn kein Überstand vorhanden wäre. Dadurch erreicht das Filterelement einen angenähert kreisförmigen Querschnitt und kann relativ einfach in eine Filtervorrichtung eingebaut werden. Ferner erfährt die Strömung eines um die Außenlage des Filterelementes herum fließenden Fluids eine geringere Strömungsbehinderung, wodurch ein relativ beruhigtes Eindringen des Fluids in das Filterelement ermöglicht wird.

Das überstehende Ende der Außenlage kann ferner dazu genutzt werden, um es mit einer Außenlage einer nachfolgenden Windungsebene zu befestigen. Damit wird ein Aufwickeln der Spirale vermieden, wobei eine solche Befestigung am Ende der Außenlage eine prozesssichere, einfache und kostengünstige Fertigung des Filterelementes ermöglicht. Vorzugsweise kann die Befestigung mittels Verschweißen, bevorzugt Ultraschallschweißen, durchgeführt werden.

Das Grobfiltermedium ist bevorzugt ein Polyester-Nadelvlies und das Feinfiltermedium weist vorzugsweise Glasfaser auf. Im Vergleich zu zum Beispiel Filterpapier kommen damit Tiefenfiltrationsmedien zum Einsatz, welche eine höhere Filtrationsleistung besitzen. Die Filtermedien sind nicht gewellt oder V-förmig und werden am Umfang nicht miteinander verklebt, wie dies bei axial durchströmten Filterelementen üblich ist, sondern haften aneinander durch die eigene Umfangsspannung.

Bei einer Ausführungsform der Erfindung sind die Filtermedien des Filterelementes an mindestens einer Stirnseite fluiddicht miteinander verpresst. Somit ist ein aufwändiges Kleben nicht erforderlich.

Die Aufgabe wird ferner durch eine Filtervorrichtung mit einem Filterelement wie vorstehend beschrieben gelöst, wobei die Filtervorrichtung an mindestens einer Stirnseite eine Filterendkappe aufweist, um einen Fluidaustritt an den Seiten zu verhindern. An dieser Endkappe kann auch ein Bypass-Ventil angebracht sein, welches für das Fluid bei zu hohem Differenzdruck am Filterelement eine Ausweichmöglichkeit bietet.

. Nachfolgend wird die Erfindung anhand von in den Zeichnungen dargestellten Ausführungsformen weiter beschrieben. Es zeigen:
- Figur 1: eine schematische Darstellung einer ersten Ausführungsform des erfindungsgemäßen Filterelementes in einer Draufsicht;
- Figur 2: eine schematische Darstellung einer ersten Ausführungsform der erfindungsgemäßen Filtervorrichtung in einem Querschnitt; und
- Figur 3: ein Diagramm, in welcher die Partikelanzahl in Abhängigkeit von der Filtrationsdauer für unterschiedliche Partikelgrößen dargestellt ist, unter Verwendung der ersten Aus- führungsform des erfindungsgemäßen Filterelementes.

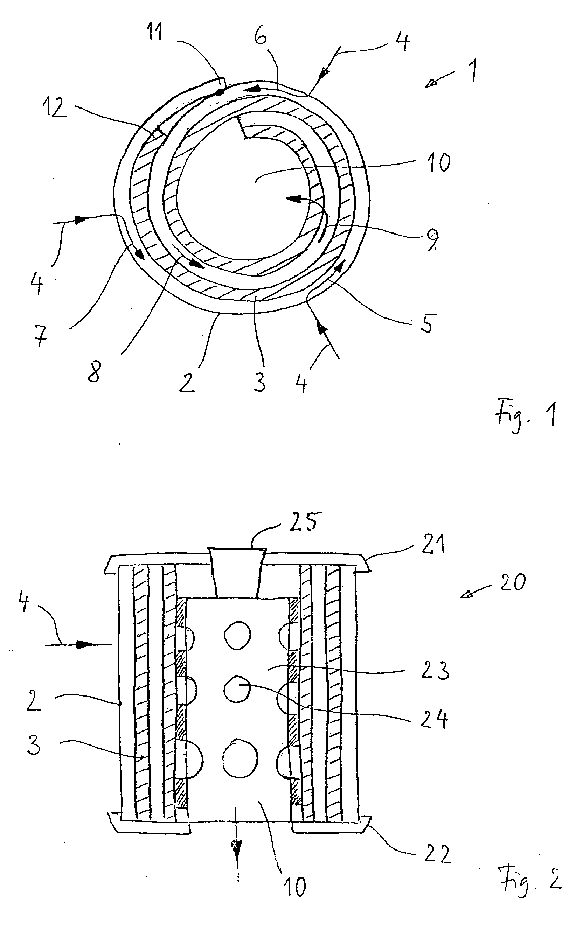

In Fig. 1 ist ein Filterelement 1 dargestellt, welches aus einem Grobfiltermedium 2 als Außenlage und einem Feinfiltermedium 3 als Innenlage gebildet ist. Die beiden Filtermedien sind aufeinandergeschichtet und zusammen spiralförmig aufgewickelt. Zwischen beiden Filtermedien kann ein Abstand vorhanden sein, wobei in der in Fig. 1 dargestellten Ausführungsform die beiden Lagen einander berühren, so dass ein kompakter Aufbau erreicht wird. Das zu filternde Fluid trifft senkrecht auf die Umfangsfläche der Außenlage, siehe Pfeile 4, und dringt in diese Außenlage ein. Dort beginnt die Filterung, wobei das Fluid nach dem Durchdringen des Grobfiltermediums 2 auf das Feinfiltermedium 3 trifft. Ein Teil des Fluids wird in das Feinfiltermedium 3 eindringen, wobei ein anderer Teil entlang dem Grobfiltermedium 2 spiralförmig in Richtung der geometrischen Mitte des Filterelementes 1 vordringt, siehe Pfeile 5 bis 8. Nach dem Passieren einer gewissen Streckenlänge im Grobfiltermedium 2 kann das Fluid auch durch das Feinfiltermedium hindurchdringen, siehe Pfeil 9, und im Zentrum 10 das Filterelement verlassen.

In Fig. 1 ist die Zufuhr des Fluids mit den Pfeilen 4 dargestellt. Dies soll jedoch nur der Übersichtlichkeit dienen. Ein in einer Filtervorrichtung eingesetztes Fluid kann selbstverständlich entlang dem gesamten Umfang in das Grobfiltermedium 2 eindringen.

Indem das Fluid spiralförmig wie in einer Drainage abgeleitet werden kann, findet eine Beladung des Grobfiltermediums nicht nur in der äußersten Wickelschicht, sondern auch in den inneren Wickelschichten statt. Dies bewirkt eine höhere Partikelaufnahmekapazität als bei herkömmlichen Filtern, die nur einen radialen Fluidtransport durch die Filtermedien erlauben.

Die Befestigung des Grobfiltermediums 2 kann an einem Ende 11 an der Außenlage derart erfolgen, dass es mit dem Grobfiltermedium in der darunter angeordneten Wickelebene zum Beispiel mit Ultraschall verschweißt wird. Da es sich bei den Filtermedien um den gleichen Typ (Grobfiltermedium) handelt, besitzen auch beide Schweißzonen den gleichen Schmelzpunkt, so dass ein zuverlässiges Verschweißen gelingen kann. Die Innenlage ist in diesem Bereich verkürzt, siehe 12, so dass das Ende der äußersten Außenlage über das Ende der äußersten Innenlage übersteht.

Fig. 2 zeigt einen Querschnitt durch eine Filtervorrichtung 20 mit dem Filterelement 1, wobei an den Stirnseiten jeweils eine Kappe 21 und 22 angebracht ist. Diese Kappen verhindern einen Fluidaustritt, so dass das Fluid gezwungen wird, durch die Filtermedien zu passieren. Zur besseren Stabilisierung des Filterelementes und /oder zur besseren Aufnahme der Kappen 21 und 22 kann die Filtervorrichtung noch mit einem Kern 23 versehen sein, der Öffnungen 24 für das hindurchdringende Fluid aufweist. Die obere Kappe 21 weist bei der in Fig. 2 dargestellten Ausführungsform zusätzlich ein Bypass-Ventil 25 auf, so dass bei zu hohem Differenzdruck das Fluid die Filtermedien umgehen und direkt zum Fluidaustritt in das Zentrum 10 des Filterelementes gelangen kann.

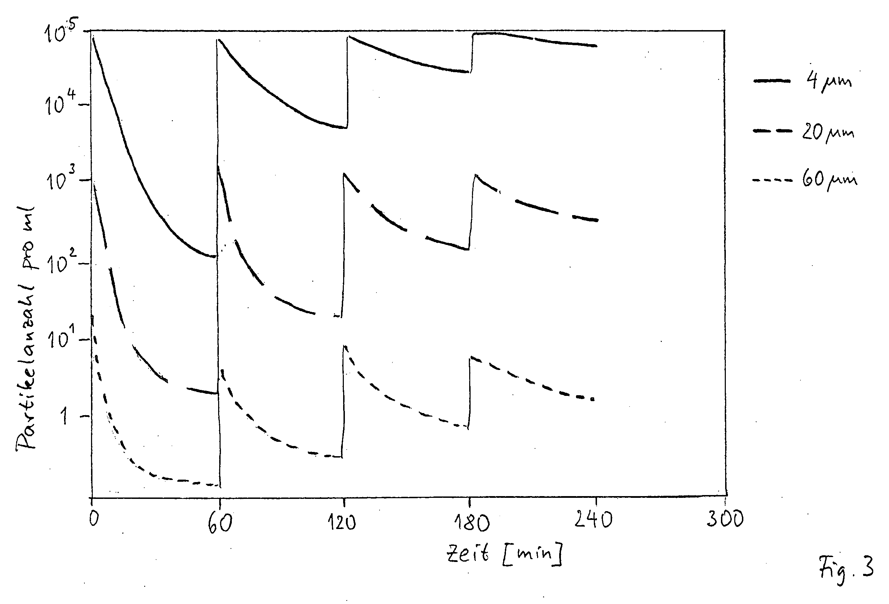

Die Wirkung des erfindungsgemäßen Filterelementes ist in einem Diagramm in Fig. 3 dargestellt. Auf der Ordinate ist die Partikelanzahl pro Milliliter im gefilterten Fluid im logarithmischen Maßstab und auf der Abszisse die Zeitdauer eines Versuches aufgetragen. Die Kurven repräsentieren die Partikelanzahl in Abhängigkeit von der Zeit, wobei die Ergebnisse für Partikel der Größe 4 Mikrometer, 20 Mikrometer und 60 Mikrometer gelten. Zu Beginn, also bei der Zeit "0 Minuten", wurden 2 Gramm einer genormten Partikelmenge (ISO MTD) dem Fluid zugesetzt. Das Fluid wurde vom Filterelement ständig gereinigt, so dass mit zunehmender Versuchsdauer die Kurven für sämtliche Partikelgrößen einen degressiven Verlauf zeigten. Dies bedeutete eine abnehmende Partikelanzahl mit fortschreitender Filterung. Nach 60 Minuten wurden erneut 2 Gramm der genormten Menge an Partikeln dem Fluid zugegeben, so dass sofort die Zahl der gemessenen Partikel im Fluid zunahm. Mit fortschreitender Versuchsdauer nahm jedoch die Partikelanzahl wieder ab. Nach 120 Minuten erreichten die Werte aber nicht mehr das niedrige Niveau, welches nach 60 Minuten vorlag. Dies kann man als Hinweis deuten, dass sich das Filterelement immer mehr mit Partikeln zusetzte. Der Vorgang mit der Zugabe von 2 Gramm einer genormten Partikelmenge wurde nach 120 Minuten wiederholt, wobei die Kurven nach schnellem Anstieg erneut einen degressiven Verlauf zeigten. Nach 180 Minuten war die Partikelzahl zwar niedriger als nach Beginn der zweiten Partikelzugabe, jedoch lagen die Werte über jenen, welche nach 120 Minuten erreicht waren.

Zum Vergleich wurde dieser Versuch mit einem Filterelement durchgeführt, welches nur eine radiale Durchströmung mit einem einzigen Filtermedium ermöglichte. Der Kurvenverlauf war prinzipiell vergleichbar, jedoch war die Partikelzahl nach 60, 120 und 180 Minuten jeweils deutlich höher als bei einer Filterung mit dem erfindungsgemäßen Filterelement. Die Partikelaufnahmekapazität ist bei dem erfindungsgemäßen Filterelement etwa 33 % höher als bei einem Filterelement mit ausschließlich radialem Fluiddurchtritt. Eine geforderte Fluidreinheit bzw. Partikelanzahl im Fluid konnte bei dem erfindungsgemäßen Filterelement somit schneller erreicht werden.

## Patentansprüche

1. Filterelement (1) zur Filterung von Fluid (4) für einen Motor oder ein Getriebe, aufweisend ein erstes Filtermedium (2), welches zylinderförmig aufgebaut ist, wobei zur Filterung in einer zugehörigen Filtervorrichtung (20) das Fluid (4) senkrecht auf die Umfangsfläche des ersten Filtermediums (2) auftreffen, in dieses eindringen und passieren kann,
**dadurch gekennzeichnet,**
**dass** das Filterelement (1) ein zweites Filtermedium (3) mit einer vom ersten Filtermedium (2) unterschiedlichen Filterdichte aufweist, das erste Filtermedium (2) und das zweite Filtermedium (3) als Filterlagen aufeinander geschichtet sind und diese zusammen spiralförmig aufgewickelt sind.

2. Filterelement (1) nach Anspruch 1,
**dadurch gekennzeichnet,**
**dass** eines der Filtermedien (2, 3) ein Grobfiltermedium ist und das andere Filtermedium (3, 2) ein Feinfiltermedium ist.

3. Filterelement (1) nach Anspruch 2,
**dadurch gekennzeichnet,**
**dass** in Fluidströmungsrichtung betrachtet das Fluid (4) zuerst auf das Grobfiltermedium (2) und anschließend auf das Feinfiltermedium (3) trifft, so dass das Grobfiltermedium (2) eine Außenlage und das Feinfiltermedium (3) eine Innenlage bildet.

4. Filterelement (1) nach einem der vorherigen Ansprüche,
**dadurch gekennzeichnet,**
**dass** mindestens ein zusätzliches Filtermedium als zusätzliche Filterlage auf dem ersten und zweiten Filtermedium (2, 3) angeordnet ist.

5. Filterelement (1) nach einem der Ansprüche 3 oder 4,
**dadurch gekennzeichnet,**
**dass** ein Ende (11) der Außenlage über das benachbarte Ende (12) der Innenlage übersteht.

6. Filterelement (1) nach Anspruch 5,
**dadurch gekennzeichnet,**
**dass** das überstehende Ende (11) der Außenlage mit einer Außenlage einer nachfolgenden Wicklungsebene befestigt ist.

7. Filterelement (1) nach Anspruch 6,
**dadurch gekennzeichnet,**
**dass** die Befestigung mittels Verschweißen, bevorzugt Ultraschallschweißen, durchführbar ist.

8. Filterelement (1) nach einem der vorherigen Ansprüche,
**dadurch gekennzeichnet,**
**dass** das Grobfiltermedium (2) ein Polyester-Nadelvlies und das Feinfiltermedium (3) Glasfaser aufweist.

9. Filterelement (1) nach einem der vorherigen Ansprüche,
**dadurch gekennzeichnet,**
**dass** die Filtermedien (2, 3) des Filterelementes (1) an mindestens einer Stirnseite fluiddicht miteinander verpresst sind.

10. Filtervorrichtung (20) mit einem Filterelement (1) nach einem der Ansprüche 1 bis 8,
**dadurch gekennzeichnet,**
**dass** das Filterelement (1) an mindestens einer Stirnseite eine Filterendkappe (21, 22) aufweist.

11. Filtervorrichtung (20) nach Anspruch 9,
**dadurch gekennzeichnet,**
**dass** die Filterendkappe (21) ein Bypass-Ventil (25) aufweist.
